# FASCICULE DE BREVET EUROPEEN

(11) **EP 1 776 243 B1**
(45) Date de publication et mention de la délivrance du brevet: **17.02.2010**
(21) Numéro de dépôt: 05793296.4
(22) Date de dépôt: 20.07.2005
(51) Int. Cl.: B43K 24/06

(54) **MECANISME POUR INSTRUMENT D'ECRITURE, INSTRUMENT D'ECRITURE COMPRENANT UN TEL MECANISME ET PROCEDE DE FABRICATION**
MECHANISMUS FÜR EIN SCHREIBINSTRUMENT, SCHREIBINSTRUMENT MIT SOLCH EINEM MECHANISMUS UND HERSTELLUNGSVERFAHREN
MECHANISM FOR A WRITING INSTRUMENT, WRITING INSTRUMENT COMPRISING ONE SUCH MECHANISM, AND PRODUCTION METHOD

(30) Priorité: 26.07.2004 FR 0408241
(43) Date de publication de la demande: 25.04.2007
(73) Titulaire: Société BIC, 92611 Clichy Cedex (FR)
(72) Inventeur: ROLION, Franck, F-95270 Belloy en France (FR); BEZ, Arnaud, F-92410 Ville d'Avray (FR)
(74) Mandataire: Vougny, Christophe
(86) Numéro de dépôt international: PCT/FR2005/001866
(87) Numéro de publication internationale: WO 2006/018504

(56) Documents cités:
- DE-U1- 20 000 422
- FR-A- 2 809 671
- US-A- 3 653 777

## Description

La présente invention se rapporte aux mécanismes d'instrument d'écriture.

Plus particulièrement, l'invention se rapporte à un mécanisme pour instrument d'écriture comprenant un premier élément tubulaire d'axe central qui comporte une première et une deuxième paroi présentant respectivement un premier et un deuxième bords qui délimitent un guide s'étendant longitudinalement selon une direction inclinée par rapport à l'axe central entre une première extrémité et une deuxième extrémité.

Ce mécanisme comporte en outre un deuxième élément adapté pour coulisser le long du premier élément et comportant un ergot coulissant dans le guide.

De nombreux instruments d'écriture comportent un tel mécanisme pour sortir ou rétracter une pointe d'écriture.

Dans ces mécanismes, le guide appelé aussi chemin de came, est réalisé sous forme d'une rainure ou d'une fente, dans laquelle coulisse un ergot.

Le guide peut être hélicoïdal, comme dans le document FR-A-2 809 671, afin de transformer un mouvement de pivotement d'une des pièces du corps de l'instrument d'écriture en mouvement de translation de la pointe selon l'axe longitudinal de l'instrument. Cependant dans ce type de guide, le coulissement de l'ergot dans le guide peut être difficile à réaliser à cause des frottements, ce qui induit des efforts supplémentaires que l'utilisateur doit fournir.

La présente invention a pour but d'améliorer les mécanismes dé l'art antérieur, et notamment d'augmenter leur confort d'utilisation en limitant les frottements entre le premier et le deuxième élément, sans toutefois augmenter les coûts de fabrication.
A cet effet, selon l'invention, un mécanisme du genre en question est caractérisé en ce que la deuxième paroi est décalée vers l'axe central par rapport à la première paroi selon une direction radiale par rapport audit axe central.

Grâce à ces dispositions, les bords définissant le chemin de came sont décalés l'un par rapport à l'autre, ce qui est moins contraignant pour leur réalisation et donne plus de liberté pour leur conférer un profil idéal. Il est notamment ainsi possible de réaliser le premier élément par injection avec des bords pratiquement toujours tangentiels à l'ergot du deuxième élément coulissant, améliorant ainsi le contact entre le bord et l'ergot pour mieux guider le coulissement de ce dernier le long du guide.

Dans divers modes de réalisation du mécanisme selon l'invention, on peut éventuellement avoir recours en outre, à l'une ou à l'autre des dispositions suivantes :
- le guide s'étend longitudinalement selon une forme hélicoïdale ;
- les parois constituent des portions de cylindre ;
- au moins l'un des bords s'étend transversalement selon une direction radiale par rapport à l'axe central ;
- le premier bord s'étend transversalement selon une direction radiale par rapport à l'axe central sur une première portion du guide et le deuxième bord s'étend transversalement selon une direction radiale par rapport à l'axe central sur une deuxième portion ;
- le guide s'étend autour de l'axe central sur un secteur angulaire compris entre 60° et 180°, et préférentiellement proche de 180°;
- l'extrémité transversale intérieure du premier bord présente un rayon sensiblement égal au rayon de l'extrémité transversale extérieure du deuxième bord ;
- la deuxième paroi présente une collerette ayant un rayon extérieur sensiblement égal au rayon extérieur de la première paroi, ladite collerette présentant une face en regard du bord de la première paroi qui s'étend dans un plan transversal à l'axe central ;
- le premier élément est une seule pièce en matière plastique.

L'invention se rapporte également à un instrument d'écriture comprenant un mécanisme tel que défini précédemment, dans lequel le premier élément est relié à une première partie du corps de l'instrument et dans lequel le deuxième élément est relié à la deuxième partie du corps, les première et deuxième partie étant pivotantes montées l'une par rapport à l'autre autour de l'axe central.

Par ailleurs, l'invention a également pour objet un procédé de fabrication d'un mécanisme selon l'invention, caractérisé en ce que :
- on fournit au moins deux demi coquilles adaptées pour former une partie externe des parois et le premier bord ;
- on fournit un noyau adapté pour former une partie interne des parois du premier élément et le deuxième bord ;
- on injecte de la matière entre les demi coquilles et le noyau, puis
- on écarte les coquilles radialement selon une direction radiale par rapport à l'axe, et on retire le noyau selon une direction parallèle à l'axe central.

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 représente une vue en perspective d'un mécanisme selon l'invention en position de rangement,
- la figure 2 représente une vue analogue à la figure 1 du mécanisme en position de sortie,
- la figure 3 représente le premier élément du mécanisme selon l'invention en perspective,
- la figure 4 représente une vue en coupe longitudinale du premier élément du mécanisme selon l'invention,

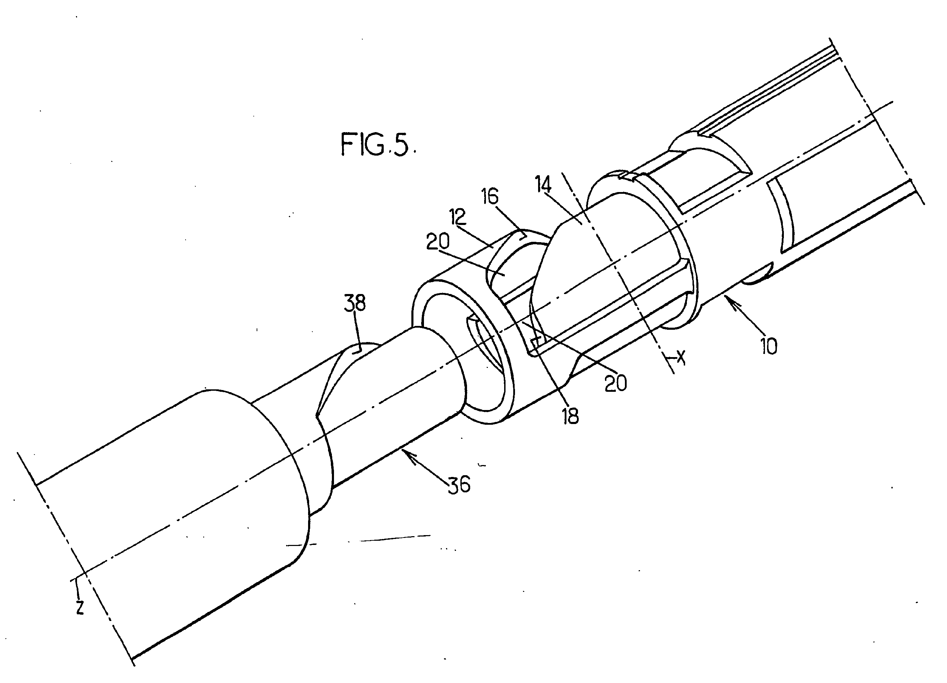

- la figure 5 représente une vue en perspective du premier élément et d'une partie du moule permettant de fabriquer le premier élément du mécanisme selon l'invention,
- la figure 6 représente une vue en coupe longitudinale d'un instrument d'écriture comprenant le mécanisme représenté aux figures 1 à 6.

Sur les différentes figures, les mêmes références désignent des éléments identiques ou similaires.

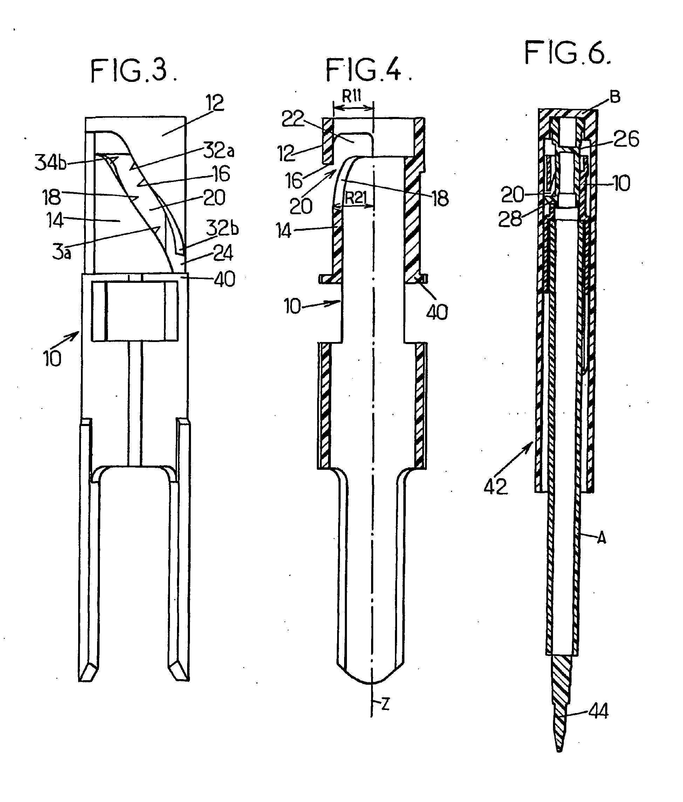

Le mécanisme selon l'invention peut être appliqué à différents instruments d'écriture et notamment des instruments du type stylo à bille, tel que représenté à la figure 6.

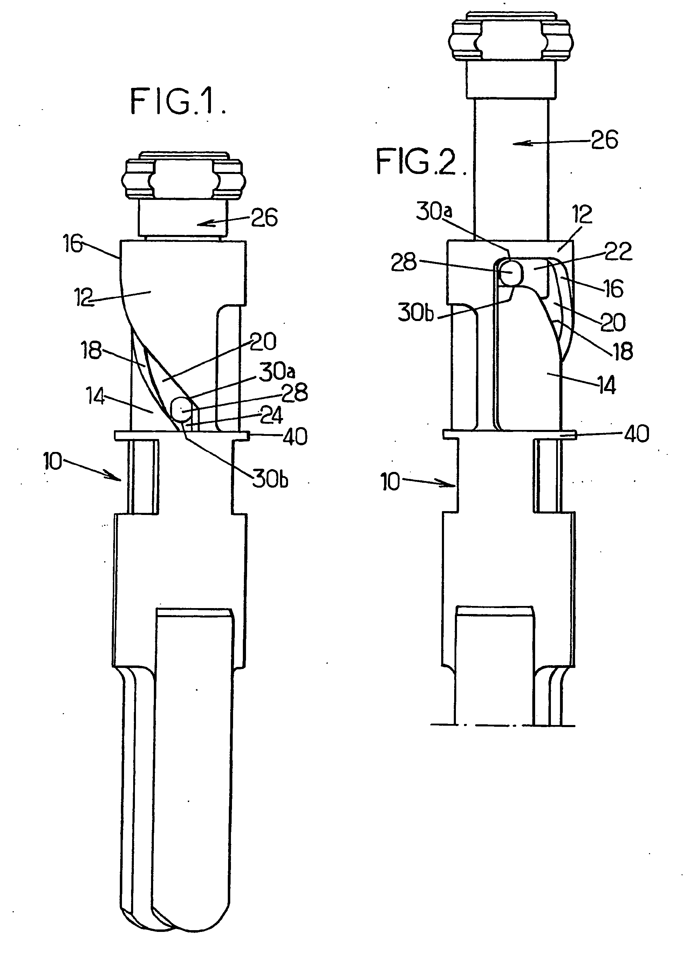

Le mécanisme permet le retrait, la sortie ou le blocage de la pointe d'écriture du stylo par pivotement relatif d'une première partie A du corps du stylo par rapport à une seconde partie B du corps du stylo, chaque partie étant reliée respectivement à un premier 10 et à un deuxième 26 élément du mécanisme selon l'invention, mieux visible à la figure 1 représentant celui-ci en position de rangement. Toutefois, ce mécanisme pourrait être mis en oeuvre pour assurer une autre fonction de l'instrument d'écriture, comme par exemple commander la sortie d'une gomme à l'arrière de l'instrument ou commander un mécanisme d'avance de mine.

Le mécanisme comporte un premier élément 10 tubulaire s'étendant longitudinalement selon un axe central Z. Cet élément tubulaire 10 est constitué par des parois (12, 14) formées par une portion de cylindre. L'élément tubulaire 10 comporte une première paroi 12 et une deuxième paroi 14 comprenant respectivement un premier 16 et un deuxième 18 bord délimitant un guide 20, ou chemin de came, qui s'étend longitudinalement entre une première 22 et une seconde 24 extrémité selon une direction inclinée par rapport à l'axe central Z.

Le guide 20 présente une forme hélicoïdale, de pas régulier, couvrant un secteur angulaire de 180° qui représente l'angle formé entre la première extrémité 22 et la seconde extrémité 24. La deuxième extrémité 24 du guide 20, qui est disposée à 180° par rapport à la première extrémité 22, est visible à la figure 2, dans laquelle le premier élément 10 a effectué une rotation de 180° par rapport à la figure 1.

Le mécanisme comporte en outre un deuxième élément 26 qui est adapté pour coulisser le long du premier élément 10 selon l'axe central Z. A cet effet, il comporte un ergot 28 qui est disposé dans le guide 20 et coulisse le long de ce dernier.

Sur la figure 1, le deuxième élément 26 est en position de rangement, c'est à dire que le deuxième élément 26 est en majeure partie logé dans le premier élément 10.

Le deuxième élément 26 coulisse entre la position de rangement représentée à la figure 1, dans laquelle l'ergot 28 est situé à la deuxième extrémité 24 du guide 20, et la position de sortie représentée à la figure 2 dans laquelle l'ergot 28 est situé dans la première extrémité 22 du guide 20. La position de rangement du mécanisme correspond à la position de retrait de la pointe d'écriture, et la position de sortie du mécanisme correspond à la position de sortie de la pointe d'écriture.

Le guide 20 s'étend à sa première extrémité 22 selon un plan transversal à l'axe central Z de manière à bloquer l'ergot 28 en translation selon l'axe central Z lorsque la pointe d'écriture est en position de sortie. En revanche, le guide 20 s'étend à la deuxième extrémité 24 selon une direction inclinée par rapport à l'axe Z de manière à faciliter le coulissement de l'ergot pour amener le mécanisme de la position de rangement vers la position de sortie et, par conséquent, amener la pointe d'écriture de la position de retrait vers la position de sortie. La pointe d'écriture est reliée au premier élément 10 par emmanchement à force.

L'ergot 28 coulisse sur les bords (16, 18) du guide. En outre, les première et deuxième parois (12, 14) sont décalées radialement par rapport à l'axe central Z. Telle que représentée à la figure 4, la deuxième paroi 14 est décalée en tout point de sa circonférence selon une direction radiale vers l'axe central Z par rapport à la première paroi 12. Cette disposition permet une fabrication moins contraignante et donne plus de liberté pour leur conférer un profil idéal. Il est notamment possible de réaliser à l'aide du procédé décrit ci-après, le premier élément 10 avec des bords 16 et 18 qui s'étendent transversalement selon une direction radiale par rapport à l'axe central Z, et ce quel que soit le point pris le long de l'un des bords (16, 18) entre la première et la deuxième extrémité du guide.

Tel que représenté, l'extrémité transversale intérieure du premier bord 16 présente un rayon R11, visible à la figure 4, sensiblement égal au rayon d'extrémité transversale extérieur R21 du deuxième bord 18, de manière à bien maintenir l'ergot 28 dans un plan parallèle aux deux bords (16, 18). On notera que contrairement à ce qui aurait pu être imaginé, le décalage des bords (16, 18), c'est à dire le fait que R11 est supérieur ou égal à R21, n'a pas d'effet néfaste sur le guidage de l'ergot 28.

Les bords 16 et 18 s'étendent transversalement, c'est-à-dire dans le sens de la largeur des bords ou encore selon l'épaisseur de la paroi correspondante, selon une direction radiale par rapport à l'axe central Z, sur une portion du guide 20. Chaque bord forme aussi, dans le sens de sa longueur, une hélice entre la première 22 et la deuxième 24 extrémité du guide 20.

L'ergot 28 du deuxième élément 26 s'étend radialement et présente au moins une partie arrondie qui coopère avec le bord 16 et/ou 18. On obtient ainsi un contact tangentiel, le long d'une ligne radiale, entre l'ergot 28 et l'un ou l'autre des bords (16, 18), ce qui limite les frottements.

La largeur du guide 20 est légèrement supérieure à la largeur de l'ergot 28 pour éviter un blocage de celui-ci dans le guide. Aussi, il est possible que l'ergot 28 soit principalement en appui contre l'un des deux bords et rarement en contact avec l'autre bord. Cela dépend de la direction dans laquelle le premier élément 10 est sollicité par des moyens élastiques prévus dans le corps du stylo. Dans un tel cas, il suffit que le bord contre lequel appuie l'ergot 28 soit radial en tout point compris entre la première et la deuxième extrémité du guide 20.

Mais l'ergot 28 peut aussi venir en contact avec l'un des bords lorsque le mécanisme est actionné dans un premier sens, et avec l'autre bord lorsqu'il est actionné dans l'autre sens. Dans ce cas, les deux bords (16, 18) peuvent être parfaitement radiaux sur toute leur longueur.

Toutefois, la pression exercée par l'ergot 28 contre un bord peut varier au cours du coulissement le long du guide 20 et par conséquent, il n'est pas nécessaire que le bord soit radial sur toute sa longueur pour obtenir un confort d'actionnement satisfaisant. Aussi, dans le mode de réalisation représenté, et comme cela est mieux visible sur la figure 3, le premier bord 16 s'étend selon une direction radiale sur une première portion 32a du guide 20 seulement, et le deuxième bord 18 s'étend selon une direction radiale sur une portion 34a située en regard de la portion non radiale 32b du premier bord 16. Les portions (32b, 34b) des bords (16, 18) qui ne s'étendent pas radialement présentent une direction transversale légèrement inclinée, de sorte que le guide 20 est un peu évasé vers l'extérieur. L'angle formé par les portions (32b, 34b) avec une direction radiale idéale, forme un angle de dépouille qui facilite le démoulage en évitant un affaissement du moule contre le bord.

L'invention fonctionne comme décrit ci-dessous.

Lorsque le deuxième élément 26 est en position de rangement, c'est-à-dire lorsque la pointe d'écriture est en position de retrait, l'ergot 28 est situé dans la deuxième extrémité 24 du guide 20. L'utilisateur effectue alors une rotation d'une partie de l'instrument d'écriture A reliée au premier élément 10 du mécanisme, par rapport à l'autre partie B de l'instrument d'écriture reliée au deuxième élément 10 du mécanisme. Cette rotation entraîne ainsi le coulissement de l'ergot 28 dans le guide 20. L'ergot 28 suit alors le chemin formé par le guide 20 en prenant appui sur le premier bord 16.

Le premier bord 16 présente une direction radiale, selon la direction transversale, par conséquent, il est donc tangentiel aux contours circulaires 30a, 30b de l'ergot 28 permettant ainsi un contact limitant les frottements.

Ainsi lors du déplacement du guide, le coulissement de l'ergot 28 de la deuxième extrémité 24 vers la première extrémité 22 du guide 20, en vue de ramener la pointe d'écriture depuis la position de retrait vers la position de sortie, est rendue plus facile en limitant les frottements et diminuent la force que l'utilisateur doit appliquer. Puis lorsque l'ergot 28 est disposé à la première extrémité 22 du guide 20 c'est-à-dire lorsque la pointe d'écriture est en position de sortie, l'ergot 28 prend appui sur le bord 18 de la deuxième paroi 14, ce bord 18 présentant une direction perpendiculaire par rapport à l'axe central Z. Ainsi le deuxième élément 26 est bloqué en translation entre le premier 16 et le deuxième 18 bords délimitant le guide 20, ce qui permet de maintenir la pointe d'écriture en position de sortie, pour son utilisation.

Lorsque l'utilisateur souhaite rétracter la pointe d'écriture, il effectue un mouvement de rotation de la partie A de l'instrument d'écriture reliée au premier élément 10, entraînant le déplacement du premier élément 10 et ainsi le coulissement de l'ergot 28 dans le guide en direction de la deuxième extrémité 24.

La figure 6 représente un instrument d'écriture 42 du type stylo bille comportant un mécanisme selon l'invention.

Le stylo 42 comprend une pointe d'écriture 44, reliée de manière solidaire au premier élément 10. L'instrument d'écriture comporte en outre un corps formé de deux parties A et B, dont la partie B opposée à la pointe d'écriture 44 est solidaire du deuxième élément 26, qui est emmanché à force dans ladite partie B.

Ainsi lors du retrait ou de la sortie de la pointe d'écriture 44 par pivotement relatif des parties A et B, le premier élément 10 subit un mouvement de translation pour amener la pointe d'écriture 44 dans ses deux positions.

En effet, le mouvement de rotation effectué sur la partie A de l'instrument d'écriture, entraîne le coulissement de l'ergot 28 dans le guide 20.

Le deuxième élément 26 comportant l'ergot 28 étant solidaire de la partie A de l'instrument d'écriture, c'est le premier élément 10 qui subit une translation, entraînant dans son mouvement la pointe d'écriture 44.

Le premier élément 10 du mécanisme selon l'invention peut être réalisé de la manière suivante.

Le premier élément 10 est une pièce plastique qui est réalisée par injection. Pour cela, on fournit deux demi-coquilles pour reformer la partie externe des parois 12 et 14 du premier élément 10. L'une des demi coquilles présente une empreinte correspondant au premier bord 16 de la première paroi 12 qui couvre un secteur angulaire de 180°. Bien entendu, si le guide devait s'étendre sur plus de 180°, l'autre demi coquille présenterait une empreinte dans le prolongement de celle de la première demi coquille, mais au risque de créer une aspérité sur le bord qui serait néfaste au coulissement de l'ergot. On fournit un noyau 36 pour former les parties internes des parois 12 et 14 du premier élément 10. Ce noyau 36 présente une empreinte 38 correspondant au deuxième bord 18. On injecte la matière plastique entre le noyau 36 et les demi coquilles.

Ensuite on écarte les coquilles radialement selon une direction radiale X, car le bord 16 et la collerette 40 du premier élément 10 forment deux demi surfaces convexes vues des extrémités de l'axe X, et par conséquent, démoulable par translation dans deux sens opposés. Le retrait du moule radialement selon la direction transversale X offre un démoulage simple et rapide à effectuer. Le retrait du noyau 36 est effectué selon la direction parallèle à l'axe central Z, sans poser de problème de démoulage car l'empreinte 38 est une face d'extrémité longitudinale du noyau 36. Ce mode de fabrication permet un démoulage simple et rapide tout en permettant de réaliser un guide 20 avec un profil qui offre un grand confort d'utilisation.

En effet, avec les dispositifs de moulage de l'art antérieur, dans lesquels les deux bords du guide sont réalisés par l'une des demi coquilles du moule, on est obligé de prévoir une section évasée du guide sur les portions de celui-ci formant un angle avec la direction de démoulage, afin que le relief du moule formant le guide ne soit pas bloqué par le bord qui est situé du côté de la direction de démoulage. Sur ces portions évasées du guide, l'ergot vient en contact ponctuel sur une extrémité transversale du bord, ce qui est néfaste à un bon glissement et peut même créer une usure prématurée du mécanisme.

L'invention n'est nullement limitée aux modes de réalisation décrits et illustrés qui ne sont donnés qu'à titre d'exemples.

## Revendications

1. Mécanisme pour instrument d'écriture comprenant :
- un premier élément (10) tubulaire d'axe central (Z) qui comporte une première (12) et une deuxième (14) paroi présentant respectivement un premier et un deuxième bords (16, 18) qui délimitent un guide (20) s'étendant longitudinalement selon une direction inclinée par rapport à l'axe central (Z) entre une première extrémité (22) et une deuxième extrémité (24),
- un deuxième élément (26) adapté pour coulisser le long du premier élément (10) et comportant un ergot (28) coulissant entre les premier et deuxième bords (16, 18) du guide (20),
**caractérisé en ce que** la deuxième paroi (14) est décalée vers l'axe central (Z) par rapport à la première paroi (12) selon une direction radiale par rapport audit axe central (Z).

2. Mécanisme pour instrument d'écriture selon la revendication 1, dans lequel le guide (20) s'étend longitudinalement selon une forme hélicoïdale.

3. Mécanisme pour instrument d'écriture selon l'une des revendications précédentes, dans lequel les parois (12, 14) constituent des portions de cylindre.

4. Mécanisme selon l'une des revendications précédentes, dans lequel au moins l'un des bords (16, 18) s'étend transversalement selon une direction radiale par rapport à l'axe central (Z).

5. Mécanisme selon l'une des revendications 1 à 4, dans lequel le premier bord (16) s'étend transversalement, selon une direction radiale par rapport à l'axe central (Z) sur une première portion du guide seulement, et le deuxième bord (18) s'étend transversalement selon une direction radiale par rapport à l'axe central (Z) sur une deuxième portion du guide.

6. Mécanisme selon l'une quelconque des revendications précédentes, dans lequel le guide (20) s'étend autour de l'axe central (Z) entre un angle de 60° et 180°.

7. Mécanisme selon l'une des revendications précédentes, dans lequel l'extrémité transversale intérieure du premier bord (16) présente un rayon sensiblement égal au rayon d'extrémité transversale extérieur du deuxième bord (18).

8. Mécanisme selon l'une des revendications précédentes, dans lequel la deuxième paroi (14) présente une collerette (40) ayant un rayon extérieur sensiblement égal au rayon extérieur de la première paroi (12), ladite collerette (40) présentant une face en regard du bord (16) de la première paroi (12) qui s'étend dans un plan transversal à l'axe central (Z).

9. Mécanisme selon l'une des revendications précédentes, dans lequel le premier élément (10) est en une seule pièce de matière plastique.

10. Instrument d'écriture comprenant
- un mécanisme selon l'une des revendications précédentes,
- un corps (42) s'étendant selon l'axe central (Z) et comprenant une première partie (A) adaptée pour guider le premier élément de mécanisme en translation selon l'axe central (Z), et une deuxième partie (B) à laquelle est relié le deuxième élément (26), les premières (A) et deuxièmes (B) parties étant montées pivotantes l'une par rapport à l'autre autour de l'axe central (Z),
- une pointe d'écriture mobile selon l'axe central (Z) à travers une ouverture du corps (42), et reliée au premier élément (10) du mécanisme.

11. Procédé de fabrication d'un mécanisme pour instrument d'écriture selon l'une des revendications 1 à 9, dans lequel le premier élément (10) est moulé par injection de matière plastique.

12. Procédé de fabrication d'un mécanisme pour instrument d'écriture selon la revendication 11 **caractérisé en ce que** :
- on fournit au moins deux demi coquilles adaptées pour former une partie externe des parois (12, 14) et le premier bord (16) ;
- on fournit un noyau (36) adapté pour former une partie interne des parois (12, 14) du premier élément (10) et le deuxième bord (18) ;
- on injecte de la matière entre les demi coquilles et le noyau (36), puis
- on écarte les coquilles radialement selon une direction radiale (X) par rapport à l'axe (Z), et on retire le noyau (36) selon une direction parallèle à l'axe central (Z).

## Claims

1. A writing implement mechanism comprising:
- a tubular first element (10) having a central axis (Z) which comprises a first (12) and second (14) walls respectively presenting a first and second edges (16, 18) defining a guide (20) extending longitudinally in a direction that is inclined relative to the central axis (Z) between a first end (22) and a second end (24);
- a second element (26) adapted to slide along the first element (10) and including a nib (28) sliding between the first and second edges (16, 18) of the guide (20),
**characterized in that** the second wall (14) is offset towards the central axis (Z) relative to the first wall (12) in a direction that is radial relative to said central axis (Z).

2. A writing implement mechanism according to the claim 1, in which the guide (20) extends longitudinally in a helical shape.

3. A writing implement mechanism according to any preceding claim, in which the walls (12, 14) constitute portions of cylinders.

4. A mechanism according to any preceding claim, in which at least one of the edges (16, 18) extends transversely in a direction that is radial relative to the central axis (Z).

5. A mechanism according to any one of claims 1 to 4, in which the first edge (16) extends transversely in a direction that is radial relative to the central axis (Z) over a first fraction only of the guide, and the second edge (18) extends transversely in a direction that is radial relative to the central axis (Z) over a second fraction of the guide.

6. A mechanism according to any preceding claim, in which the guide (20) extends around the central axis (Z) over an angle lying in the range 60° to 180°.

7. A mechanism according to any preceding claim, in which the inside transverse end of the first edge (16) presents a radius substantially equal to the radius of the outside transverse end of the second edge (18).

8. A mechanism according to any preceding claim, in which the second wall (14) presents a collar (40) having an outside radius substantially equal to the outside radius of the first wall (12), said collar (40) presenting a face facing the edge (16) of the first wall (12) that extends in a plane that extends transversely to the central axis (z).

9. A mechanism according to any preceding claim, in which the first element (10) is made as a single piece of plastics material.

10. A writing implement comprising:
- a mechanism according to any preceding claim;
- a body (42) extending along the central axis (Z) and comprising a first portion (A) adapted to guide the first element of the mechanism in translation along the central axis (Z), and a second portion (B) to which the second element (26) is connected, the first and second portions (A, B) being mounted to pivot relative to each other about the central axis (Z); and
- a writing tip that is movable along the central axis (Z) through an opening in the body (42), and that is connected to the first element (10) of the mechanism.

11. A method of manufacturing a writing implement mechanism according to any one of claims 1 to 9, in which the first element (10) is made by injection molding a plastics material.

12. A method of manufacturing a writing implement mechanism according to claim 11, **characterized by**:
- supplying at least two half-shells adapted to form the first edge (16) and outside portions of the walls (12, 14);
- providing a core (36) adapted to form the second edge (18) and inside portions of the walls (12, 14) of the first element (10);
- injecting material between the half-shells and the core (36); and then
- moving the shells away radially in a direction (X) that is radial relative to the axis (Z), and withdrawing the core (36) in a direction that is parallel to the central axis (Z).

## Patentansprüche

1. Mechanismus für ein Schreibgerät, der enthält:
- ein erstes rohrförmiges Element (10) mit einer Mittelachse (Z), das eine erste (12) und eine zweite Wand (14) aufweist, die einen ersten bzw. einen zweiten Rand (16, 18) haben, welche eine Führung (20) begrenzen, die sich in Längsrichtung gemäß einer bezüglich der Mittelachse (Z) geneigten Richtung zwischen einem ersten Ende (22) und einem zweiten Ende (24) erstreckt,
- ein zweites Element (26), das geeignet ist, um entlang des ersten Elements (10) zu gleiten und einen Nocken (28) aufweist, der zwischen dem ersten und dem zweiten Rand (16, 18) der Führung (20) gleitet,
**dadurch gekennzeichnet, dass** die zweite Wand (14) bezüglich der ersten Wand (12) zur Mittelachse (Z) in einer radialen Richtung bezüglich der Mittelachse (Z) versetzt ist.

2. Mechanismus für ein Schreibgerät nach Anspruch 1, bei dem die Führung (20) sich in Längsrichtung gemäß einer Schraubenform erstreckt.

3. Mechanismus für ein Schreibgerät nach einem der vorhergehenden Ansprüche, bei dem die Wände (12, 14) Zylinderabschnitte bilden.

4. Mechanismus nach einem der vorhergehenden Ansprüche, bei dem mindestens einer der Ränder (16, 18) sich in einer radialen Richtung quer bezüglich der Mittelachse (Z) erstreckt.

5. Mechanismus nach einem der Ansprüche 1 bis 4, bei dem der erste Rand (16) sich nur über einen ersten Abschnitt der Führung in einer radialen Richtung bezüglich der Mittelachse (Z) quer erstreckt, und der zweite Rand (18) sich in einer radialen Richtung bezüglich der Mittelachse (Z) über einen zweiten Abschnitt der Führung quer erstreckt.

6. Mechanismus nach einem der vorhergehenden Ansprüche, bei dem die Führung (20) sich um die Mittelachse (Z) zwischen einem Winkel von 60° und 180° erstreckt.

7. Mechanismus nach einem der vorhergehenden Ansprüche, bei dem das innere Querende des ersten Rands (16) einen Radius im Wesentlichen gleich dem äußeren Querenderadius des zweiten Rands (18) hat.

8. Mechanismus nach einem der vorhergehenden Ansprüche, bei dem die zweite Wand (14) einen Kragen (40) aufweist, der einen Außenradius im Wesentlichen gleich dem Außenradius der ersten Wand (12) hat, wobei der Kragen (40) eine Seite gegenüber dem Rand (16) der ersten Wand (12) hat, die sich in einer Querebene zur Mittelachse (Z) erstreckt.

9. Mechanismus nach einem der vorhergehenden Ansprüche, bei dem das erste Element (10) aus einem einzigen Bauteil aus Kunststoff ist.

10. Schreibgerät, das enthält
- einen Mechanismus nach einem der vorhergehenden Ansprüche,
- einen Körper (42), der sich gemäß der Mittelachse (Z) erstreckt und einen ersten Teil (A), der geeignet ist, um das erste Mechanismuselement in Translationsbewegung gemäß der Mittelachse (Z) zu führen, und einen zweiten Teil (B) enthält, mit dem das zweite Element (26) verbunden ist, wobei der erste (A) und zweite Teil (B) zueinander um die Mittelachse (Z) schwenkbar montiert sind,
- eine Schreibspitze, die gemäß der Mittelachse (Z) durch eine Öffnung des Körpers (42) hindurch beweglich und mit dem ersten Element (10) des Mechanismus verbunden ist.

11. Verfahren zur Herstellung eines Mechanismus für ein Schreibgerät nach einem der Ansprüche 1 bis 9, bei dem das erste Element (10) durch Kunststoffspritzguss geformt wird.

12. Verfahren zur Herstellung eines Mechanismus für ein Schreibgerät nach Anspruch 11, **dadurch gekennzeichnet, dass**:
- mindestens zwei Halbschalen bereitgestellt werden, die geeignet sind, um einen Außenbereich der Wände (12, 14) und den ersten Rand (16) zu formen;
- ein Kern (36) bereitgestellt wird, der geeignet ist, um einen Innenbereich der Wände (12, 14) des ersten Elements (10) und den zweiten Rand (18) zu formen;
- Material zwischen die Halbschalen und den Kern (36) gegossen wird, dann
- die Schalen radial gemäß einer radialen Richtung (X) bezüglich der Achse (Z) voneinander entfernt werden und der Kern (36) gemäß einer Richtung parallel zur Mittelachse (Z) entnommen wird.
